# FASCICULE DE BREVET EUROPEEN

(11) **EP 2 516 195 B1**
(45) Date de publication et mention de la délivrance du brevet: **15.05.2019**
(21) Numéro de dépôt: 10809276.8
(22) Date de dépôt: 22.12.2010
(51) Int. Cl.: B60K 35/00

(54) **MODULE DE COMMANDE ET D'AFFICHAGE POUR VÉHICULE AUTOMOBILE ET PROCÉDÉ DE FABRICATION CORRESPONDANT**
STEUER- UND ANZEIGEMODUL FÜR EIN KRAFTFAHRZEUG SOWIE ENTSPRECHENDES HERSTELLUNGSVERFAHREN
CONTROL AND DISPLAY MODULE FOR MOTOR VEHICLE AND CORRESPONDING METHOD OF MANUFACTURE

(30) Priorité: 21.04.2010 FR 1001709; 22.12.2009 FR 0906235
(43) Date de publication de la demande: 31.10.2012
(73) Titulaire: Valeo Systèmes Thermiques, 78320 Le Mesnil-Saint-Denis (FR)
(72) Inventeur: BERAUD, Henry, F-94300 Vincennes (FR); AUTRAN, Frédéric, F-75018 Paris (FR)
(86) Numéro de dépôt international: PCT/FR2010/000866
(87) Numéro de publication internationale: WO 2011/083215

(56) Documents cités:
- EP-A1- 1 901 530
- DE-A1-102008 009 954
- US-A1- 2008 309 589
- US-B1- 6 459 460

## Description

La présente invention concerne un module de commande et d'affichage à surface tactile pour véhicule automobile. Plus précisément, un tel module trouve une application avantageuse pour les commandes situées à proximité du conducteur, au niveau du panneau de bord ou de la console avant d'un véhicule automobile pour par exemple commander des fonctions de climatisation, d'un système audio, d'un système de téléphonie, d'un système multimédia ou encore d'un système de navigation. L'invention concerne également un procédé de fabrication d'un tel module de commande et d'affichage.

Les dispositifs de commande et d'affichage de véhicule automobile comportent un écran d'affichage pour l'affichage de données d'information ou de commande. Ces écrans peuvent être recouverts par exemple d'une dalle tactile transparente permettant la saisie de commandes par les utilisateurs du véhicule. Certains dispositifs comportent en outre des boutons de commande supplémentaires disposés sur les côtés de l'écran.

La dalle tactile permet de déterminer les coordonnées de l'appui d'un doigt d'utilisateur en utilisant par exemple les technologies résistive ou capacitive.

Selon un exemple de technologie, la dalle tactile résistive comporte un sandwich d'une couche déformable (tel qu'un film de plastique ou une feuille de verre semi-souple) métallisée en vis-à-vis d'un substrat de verre métallisé, la couche déformable et le substrat étant séparés par des entretoises isolantes. Quand l'utilisateur appuie sur la dalle tactile, il déforme la couche qui s'affaisse sur le substrat de verre créant un contact électrique. Une tension représentant analogiquement la position touchée est alors produite.

Les dalles tactiles sont des éléments minces et fragiles, dont la surface de commande dépasse l'écran qu'elles recouvrent, laissant apparaître des bords saillants nécessitant d'être protégés et dissimulés. Pour cela, des cadres de protection sont disposés tout autour des dalles tactiles, cachant les bords en formant une bordure en relief. L'écran d'affichage apparaît alors en retrait de la bordure du cadre, les boutons de commande faisant saillie de cette bordure.

Toutefois, les constructeurs automobiles cherchent aujourd'hui à rendre les façades de véhicule plus ergonomiques pour l'utilisateur en proposant des modules de commande d'aspect lisse et uniforme au toucher.

L'invention propose donc un module de commande et d'affichage amélioré pour véhicule automobile et un procédé de fabrication d'un tel module permettant d'obtenir une façade d'aspect lisse et uniforme au toucher.

A cet effet, la présente invention a pour objet un module de commande et d'affichage pour véhicule automobile selon la revendication 1.

Ainsi, la garniture de nivellement, périphérique à la dalle tactile, met à niveau la dalle tactile avec la bordure du boîtier de sorte que l'utilisateur ne perçoit qu'une surface lisse et uniforme au toucher, sans aspérités ou renflements, le glissement du doigt sur la frontière entre la dalle tactile et la bordure du boîtier n'étant pas perceptible et pouvant en outre être rendue invisible par le choix du coloris utilisé, donnant l'impression d'une surface continue.

On peut prévoir en outre que ledit module de commande et d'affichage comporte au moins une zone de commande tactile à l'arrière de ladite dalle tactile, disposée à côté dudit écran d'affichage et adaptée pour être rétroéclairée.

Le rétroéclairage des zones de commande tactile permet alors de simuler des boutons de commande pouvant être visualisés en conduite de jour ou de nuit, en donnant l'illusion que ceux-ci sont complètement intégrés dans le module, sans nuire à l'aspect lisse et régulier de la façade. De plus, ces zones de commande tactile ne sont pas pourvues d'écran d'affichage à l'arrière de la dalle tactile, ce qui permet de réduire sensiblement les coûts, tout en étant transparent pour l'utilisateur.

Selon un mode de réalisation, le module de commande et d'affichage comporte deux dalles tactiles, une première dalle tactile superposant ledit écran et une deuxième dalle tactile superposant lesdites zones de commande tactile, chaque dalle tactile présentant une garniture de nivellement, périphérique à la dalle tactile. On peut ainsi optimiser la couverture du module de commande et d'affichage par des dalles tactiles tout en réduisant les coûts de fabrication. Lesdites garnitures périphériques de nivellement peuvent comporter une bordure commune.

On peut prévoir que chaque dalle tactile possède sa propre technologie, les garnitures périphériques de nivellement associées permettant d'absorber les écarts de tolérances entre les différentes dalles tactiles.

Selon un premier exemple, une première dalle tactile présente des propriétés résistives et une deuxième dalle tactile présente des propriétés capacitives.

Selon un deuxième exemple, lesdites première et deuxième dalles tactiles présentent des propriétés résistives, une première dalle tactile superposant ledit écran d'affichage comportant un sandwich d'un couche (telle qu'un film de plastique ou une feuille de verre semi-souple) déformable métallisée en vis-à-vis d'un substrat de verre métallisé, la couche et le substrat étant séparés par des entretoises isolantes, et une deuxième dalle tactile superposant lesdites zones de commande tactile, comportant un sandwich de couches souples utilisant des résistances sensibles à la pression (également connu sous le nom de « FSR » pour « Force Sensing Resistor »).

On peut ainsi combiner des ressentis différents selon les surfaces de commande appuyées, un effort plus important pouvant être nécessaire pour les dalles tactiles FSR, tout en ayant une surface de commande totalement lisse. En outre, l'utilisation de la technologie FSR dans les zones de commande tactile permet de réduire les coûts.

On peut en outre prévoir que le module de commande et d'affichage comporte un film de protection, tel qu'un film de protection antireflet, superposant au moins en partie ladite dalle tactile. Le film de protection antireflet (dit « polariseur ») permet de limiter les effets de brillance ainsi que les empreintes de traces de doigts. Il peut recouvrir la dalle entière ou une partie de la dalle définie pour être destinée à la saisie, et les zones de commande tactile.

Le film de protection peut porter une encre de décor en vis-à-vis de ladite dalle tactile. L'encre de décor, alors prise en sandwich entre le substrat du film et la surface de commande, est protégée des agents extérieurs potentiellement agressifs et des doigts des utilisateurs. De plus, on préserve l'aspect lisse du module de commande et d'affichage étant donné que l'encre n'est pas en relief au-dessus du substrat de film.

On peut en outre prévoir un unique film de protection antireflet portant l'encre de décor en vis-à-vis de la dalle tactile. On évite ainsi d'avoir à superposer plusieurs films, ce qui améliore le ressenti tactile.

On peut prévoir que le matériau utilisé pour la garniture de nivellement est un élastomère ou silicone.

On peut prévoir que la dalle tactile est solidarisée avec le boîtier avec un moyen de fixation différent de la garniture de nivellement

On peut prévoir que le moyen de fixation est un autocollant double-face.

On peut prévoir que le moyen de fixation est monté en sandwich entre une seconde face inférieure que comporte la dalle tactile et une partie du boîtier en plastique

On peut prévoir que le boîtier comporte un renfort.

On peut prévoir que le moyen de fixation est monté en sandwich entre une partie du renfort et la seconde face inférieure de la dalle tactile

On peut prévoir que le renfort est un insert métallique surmoulé dans le boîtier.

On peut prévoir qu'au moins un orifice d'entrée du matériau de nivellement est situé sur une partie du renfort

On peut prévoir que le plastique du boîtier comporte entre 15% et 30 % de fibres de verre

La présente invention a également pour objet un procédé de fabrication d'un module de commande et d'affichage, selon la revendication indépendante 16.

Le procédé de fabrication permet ainsi de fabriquer un module de commande et d'affichage présentant une surface lisse, sans utiliser de fortes pressions de maintien qui pourraient endommager la dalle tactile, particulièrement fragile dans le cas de dalle tactile résistive.

Selon un premier mode de réalisation, au cours de ladite première étape, on dispose un film de protection sur ladite surface plane, et dans une deuxième étape on coule le matériau de garniture liquide.

Selon un deuxième mode de réalisation alternatif, le procédé de fabrication comporte une troisième étape au cours de laquelle on dispose, par exemple par collage, un film de protection sur ladite surface de commande.

On peut également prévoir lors du procédé de fabrication d'un module de commande et d'affichage que la dalle tactile est solidarisée au boîtier à l'aide du moyen de fixation préalablement à l'introduction du matériau de garniture liquide qui forme le joint de nivellement.

D'autres caractéristiques et avantages de l'invention ressortiront de la description suivante, donnée à titre d'exemple, sans caractère limitatif, en regard des dessins annexés sur lesquels :
- la figure la représente une vue schématique de face d'un module de commande et d'affichage sur lequel des éléments du module apparaissent en pointillés,
- la figure 1b représente une vue analogue à la figure 1a d'un module de commande et d'affichage selon un deuxième exemple de réalisation,
- la figure 2a représente une vue schématique en coupe de côté d'un module de commande et d'affichage selon un troisième exemple de réalisation,
- la figure 2b représente une vue similaire à la figure 2a d'un module de commande et d'affichage selon un quatrième exemple de réalisation,
- la figure 2c représente une vue similaire à la figure 2a d'un module de commande et d'affichage selon un cinquième exemple de réalisation,
- la figure 2d représente une vue similaire à la figure 2a d'un module de commande selon un sixième exemple de réalisation,
- les figures 3a et 3b représentent des vues schématiques de face d'un module de commande et d'affichage selon un autre exemple de réalisation, certains éléments du module de commande et d'affichage apparaissant en pointillés sur la figure 3a,
- la figure 4 représente un organigramme d'un procédé de fabrication d'un module de commande et d'affichage,
- la figure 5 représente un module de commande et d'affichage, monté dans une empreinte et maintenu par un outillage, au cours d'une deuxième étape du procédé de fabrication, et
- la figure 6 représente le module de commande et d'affichage de la figure 5 à la fin de ladite deuxième étape.
- La figure 7 représente un module de commande et d'affichage selon une variante de réalisation.
- La figure 8 représente un module de commande et d'affichage selon une variante de réalisation.

Sur ces figures, les éléments identiques portent les mêmes numéros de référence. Pour plus de clarté, les étapes de procédé sont numérotées à partir de 100.

La figure la représente une vue schématique de face d'un module de commande et d'affichage 1 pour véhicule automobile. Le module de commande et d'affichage 1 peut être fixé à proximité de l'utilisateur, par exemple au niveau de la console centrale du véhicule ou au niveau du panneau de bord (non représenté) pour par exemple commander des fonctions de climatisation, d'un système audio, d'un système de téléphonie, d'un système multimédia ou encore d'un système de navigation.

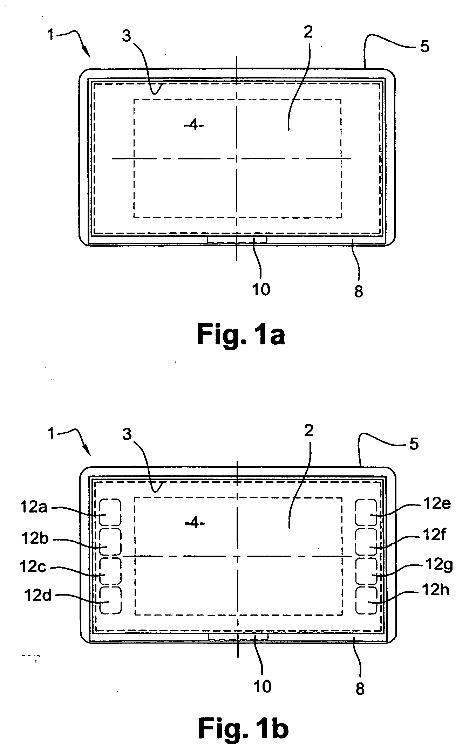

Comme visible en pointillés sur cette figure, le module de commande et d'affichage 1 comporte un écran d'affichage 2, pour l'affichage de données d'information ou de commande, au moins une dalle tactile 3 présentant une surface de commande 4 pour la saisie de commandes par un utilisateur, la surface de commande 4 étant au moins superposée à l'écran d'affichage 2, et un boîtier 5 dans lequel sont logés l'écran d'affichage 2 et la dalle tactile 3. Dans le premier exemple représenté sur la figure 1a, la dalle tactile 3 recouvre l'écran d'affichage 2 en dépassant sur les côtés de l'écran 2.

La dalle tactile 3 est transparente pour être placée sur l'écran d'affichage 2 et pour servir de moyen de saisie. La dalle tactile 3 détermine les coordonnées du point où l'utilisateur appuie avec son doigt sur la surface de commande 4, dans le plan de la dalle 3. La surface de commande 4 comporte par exemple des propriétés résistives ou capacitives. Le déplacement ou l'appui du doigt d'un utilisateur provoque la création d'un signal variant avec la localisation et le déplacement de son doigt au contact et selon l'étendue sur cette surface.

L'écran d'affichage 2 est par exemple un écran TFT (utilisant la technologie de couches minces de transistor ou «Thin film Transistor » en anglais), tel qu'un écran 7 pouces (ou 17, 78 cm).

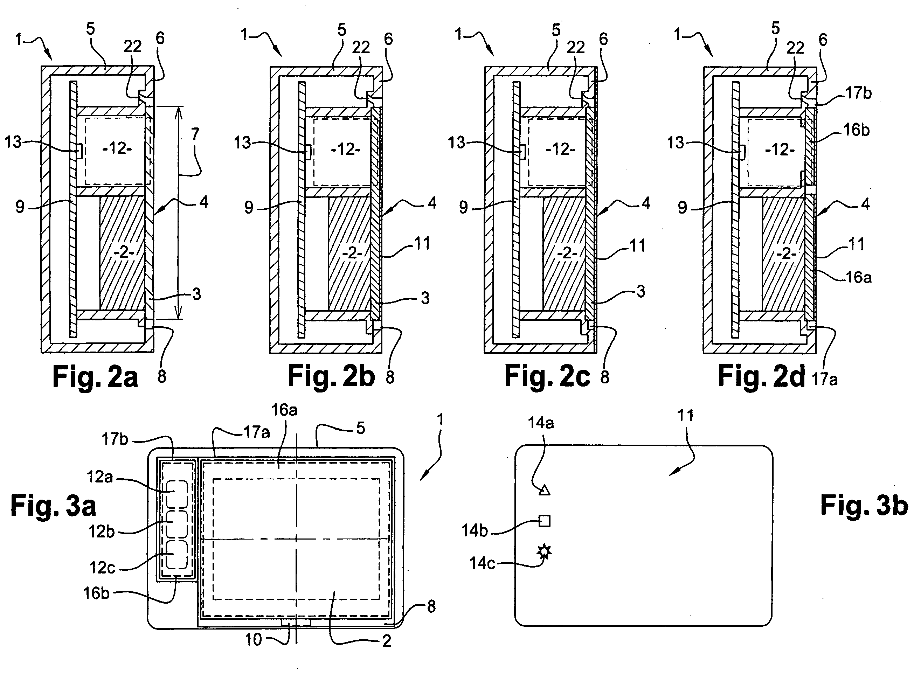

L'écran d'affichage 2 et la dalle tactile 3 permettent ainsi la saisie de commandes et l'affichage de données correspondantes. Comme mieux visible sur la vue en coupe de côté du module de commande et d'affichage 1 de la figure 2a, l'écran d'affichage 2 et la dalle tactile 3 sont logés dans un boîtier 5, par exemple en plastique ou en métal moulé ou en élastomère rigide, pouvant s'ouvrir pour la fabrication, et qui présente une bordure 6 délimitant une ouverture 7 laissant apparaître la surface de commande 4 et l'écran d'affichage 2.

Le module de commande et d'affichage 1 comporte en outre une garniture de nivellement 8, périphérique à la dalle tactile 3, pour niveler la surface de commande 4 de la dalle tactile 3 avec la bordure 6 du boîtier 5.

Ainsi, la garniture de nivellement 8, périphérique à la dalle tactile 3, met à niveau la dalle tactile 3 avec la bordure du boîtier 5 de sorte que l'utilisateur ne perçoive qu'une surface lisse et uniforme au toucher, sans aspérités ou renflements, le glissement du doigt sur la frontière entre la dalle tactile 3 et la bordure 6 du boîtier 5 n'étant pas perceptible et pouvant en outre être rendu invisible par le choix du coloris utilisé, donnant l'impression d'une surface continue.

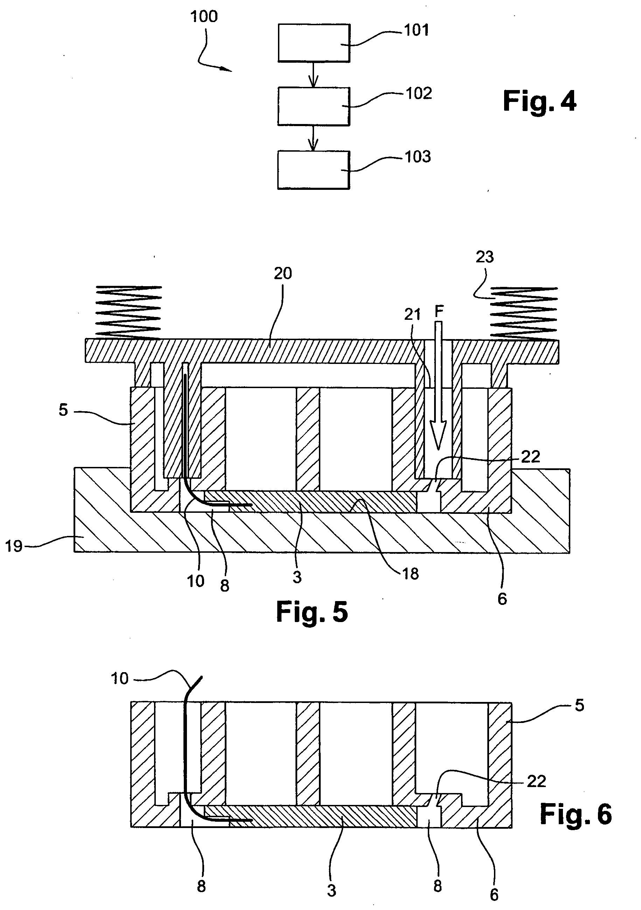

Selon un exemple de réalisation, la dalle tactile 3 est connectée à une carte à circuit imprimé 9 disposée dans le boîtier 5 par exemple via une nappe de connexion 10 en partie noyée dans la garniture périphérique de nivellement 8. La garniture périphérique de nivellement 8 permet de guider et protéger la sortie de la nappe de connexion 10, qui peut former un coude (voir figure 5).

Le module de commande et d'affichage 1 peut comporter en outre un film de protection 11, tel qu'un film coloré, opaque (figure 3b) ou fumé, et/ou antireflet. Le film de protection antireflet (dit « polariseur ») permet de limiter les effets de brillance ainsi que les empreintes de traces de doigts.

Le film de protection 11 peut recouvrir seulement la dalle tactile 3 (figure 2b) ou la dalle tactile 3, la garniture de nivellement 8 et la bordure 6 du boîtier 5 (figures 2c et 3b).

On peut prévoir en outre que le module de commande et d'affichage 1 comporte au moins une zone de commande tactile 12 à l'arrière de la dalle tactile 3, disposée à côté de l'écran d'affichage 2, adaptée pour être rétroéclairée, lorsque la dalle tactile 3 est suffisamment étendue au-delà de l'écran d'affichage 2. On distingue ainsi sur la figure 1b, huit zones de commande tactile 12a à 12h, disposées sous la surface de commande 4 de la dalle tactile 3, de part et d'autre de l'écran d'affichage 2.

Le rétroéclairage des zones de commande tactile 12a-12h permet alors de simuler des boutons de commande pouvant être visualisés en conduite de jour ou de nuit, en donnant l'illusion que ceux-ci sont complètement intégrés dans le module 1, sans nuire à l'aspect lisse et régulier de la façade. De plus, ces zones de commande tactile ne sont pas pourvues d'écran d'affichage à l'arrière de la dalle tactile, ce qui permet de réduire sensiblement les coûts, tout en étant transparent pour l'utilisateur.

Dans le cas où le module de commande et d'affichage 1 comporte un film de protection antireflet, ce film peut recouvrir la dalle entière ou une partie de la dalle définie pour être destinée à la saisie, ainsi que les zones de commande tactile.

Dans les zones de commande tactile, le film de protection 11 est prévu en partie opaque. Il comporte au moins un pictogramme 14a, 14b, 14c transparent ou translucide, au dessus des zones de commande tactile 12a, 12b, 12c, pour laisser passer la lumière, contrairement au reste du film de protection (figure 3b). Les pictogrammes 14a, 14b, 14c sont associés à au moins une fonction de commande.

En outre, et comme mieux visible sur les figures 2a à 2d, le module de commande et d'affichage 1 comporte au moins une source lumineuse 13, telle qu'une diode électroluminescente, disposée dans la zone de commande tactile 12 en face arrière de la dalle tactile 3, sur la carte de circuit imprimé 9, agencée pour éclairer la face arrière de la dalle tactile 3 et ainsi les pictogrammes.

Lors de la conduite de jour, le conducteur aperçoit clairement le pictogramme blanc 14a, 14b, 14c sur la zone de commande tactile 12a, 12b, 12c, et lors de la conduite de nuit, le rétro - éclairage permet au conducteur une localisation aisée de la commande (figure 3b).

Selon un mode de réalisation, le module de commande et d'affichage 1 comporte plusieurs dalles tactiles. Sur les exemples représentés en figure 2d ou sur les figures 3a et 3b, le module de commande et d'affichage 1 comporte deux dalles tactiles 16a et 16b. Une première dalle tactile 16a recouvre l'écran d'affichage 2 et une deuxième dalle tactile 16b recouvre des zones de commande tactile 12a, 12b, 12c (figure 3a), chaque dalle tactile 16a, 16b présentant une garniture périphérique de nivellement associée 17a, 17b. On peut ainsi optimiser la couverture du module de commande et d'affichage par des dalles tactiles tout en réduisant les coûts de fabrication. Les garnitures de nivellement périphériques associées 17a, 17b peuvent en outre comporter une bordure commune.

On peut prévoir en outre que chaque dalle tactile 16a, 16b possède sa propre technologie, les garnitures périphériques de nivellement associées 17a, 17b, permettant d'absorber les écarts de tolérances entre les différentes dalles tactiles.

Selon un premier exemple, une première dalle tactile présente des propriétés résistives et une deuxième dalle tactile présente des propriétés capacitives.

Selon un deuxième exemple, les première et deuxième dalles tactiles 16a, 16b, présentent des propriétés résistives.

La première dalle tactile 16a superposant l'écran d'affichage 2 comporte par exemple un sandwich d'une couche déformable métallisée en vis-à-vis d'un substrat de verre métallisé, la couche et le substrat étant séparés par des entretoises isolantes. Pour ses propriétés transparentes bien adaptées pour être placées sur un écran de visualisation, la couche métallisée est réalisée en ITO.

La deuxième dalle tactile 16b superposant les zones de commande tactile 12a, 12b, 12c, comporte par exemple des couches FSR. Les couches FSR comportent un sandwich de couches souples de support pourvues d'éléments résistifs dont la résistance peut varier lors de la compression des couches et se traduit par un signal électrique exploitable pour connaître l'endroit de l'appui et/ ou la pression appliquée. Pour ses propriétés moins exigeantes en terme de transparence, les couches conductrices sont ici réalisées à titre d'exemple non limitatif avec de l'encre déposée par sérigraphie sur les couches souple de support.

On peut ainsi combiner des ressentis différents selon les surfaces de commande appuyées, les dalles tactiles FSR pouvant nécessiter un effort d'appui plus important, tout en conservant une surface de commande lisse. En outre, l'utilisation de la technologie FSR dans les zones de commande tactile permet de réduire les coûts.

La figure 4 représente les étapes d'un procédé de fabrication 100 d'un module de commande et d'affichage.

Dans une première étape 101, on dispose la dalle tactile 3 et une partie du boîtier 5 destinées à les loger, sur une surface plane 18 d'une empreinte 19, l'ouverture 7 du boîtier 5 et la surface de commande 4 de la dalle tactile 3 étant disposées face à la surface plane 18, la surface de commande 4 étant disposée dans l'ouverture 7 (figure 5).

On maintient l'ensemble par un outillage 20 adapté pour appliquer une légère pression de maintien, à l'aide par exemple de ressorts 23, permettant d'éviter les fuites du matériau de garniture tout en maintenant la connectique 10. L'outillage 20 est en outre pourvu d'un conduit d'injection 21 en regard d'un orifice d'entrée du boîtier 5, débouchant dans la bordure 6 du boîtier. Afin d'améliorer le procéder en terme de rapidité et d'uniformité du joint de nivellement 8, on peut utiliser plusieurs conduits d'injection par exemple régulièrement répartis tout le long de la zone où l'on désire placer le joint de nivellement 8.

Le conduit d'injection 21 permet l'injection d'un matériau de garniture au niveau de l'orifice d'entrée 22 du boîtier 5. On choisit un matériau pouvant être coulé ou injecté à basse pression et à faible température, comme un élastomère, tel qu'un matériau EPDM (Éthylène Propylène Diène Monomère), un TPE (élastomère thermoplastique tel qu'un matériau SEBS (Styrène-éthylène-butylène-styrène), SBS (styrène-butadiène-styrène) ou TPU (Polyuréthane thermoplastique)) ou un élastomère silicone. Une fois polymérisés, ces matériaux se rigidifient, permettant un aspect lisse au toucher.

Puis, dans une deuxième étape 102, on coule le matériau de garniture liquide dans l'orifice d'entrée 22, par injection via le conduit d'injection 21 de l'outillage 20, comme indiqué par la flèche F, de sorte que le matériau de garniture se répande dans un espace périphérique à la surface de commande 4, ménagé entre la bordure 6 et la dalle tactile 3. Le matériau de garniture noie également la sortie de la nappe de connexion 10.

Après polymérisation, le matériau de garniture liquide durcit pour former la garniture périphérique de nivellement 8 (figure 6). On peut chauffer le matériau de garniture pour accélérer la polymérisation.

Selon un premier mode de réalisation, on dispose un film de protection 11 sur la surface plane 18 en regard de la surface de commande 4 au cours de la première étape 101 et dans la deuxième étape 102, on coule le matériau de garniture liquide. Le module de commande et d'affichage 1 ainsi obtenu est représenté sur la figure 2b.

Selon un deuxième mode de réalisation, le procédé 100 comporte une troisième étape 103, successive à la deuxième étape 102, au cours de laquelle on dispose le film de protection 11 sur la surface de commande 4, c'est-à-dire après avoir coulé le matériau de garniture liquide.

On peut également peindre des décors par cache ou sérigraphie sous le film de protection 11, de sorte que l'encre de décor soit prise en sandwich entre le substrat du film et la surface de commande 4. L'encre de décor est alors protégée des agents extérieurs potentiellement agressifs et des doigts des utilisateurs. De plus, on préserve l'aspect lisse du module de commande et d'affichage étant donné que l'encre n'est pas en relief au-dessus du substrat de film. Le film de protection qui porte l'encre de décor en vis-à-vis de la dalle tactile peut être antireflet. On évite ainsi d'avoir à superposer deux films, ce qui améliore le ressenti tactile.

Il suffit ensuite de monter l'écran d'affichage 2, la carte à circuit imprimé 9, brancher les connexions et de refermer le boîtier 5.

Le procédé de fabrication 100 permet ainsi de fabriquer un module de commande et d'affichage 1 présentant une surface lisse, sans avoir à utiliser de fortes pressions de maintien qui pourraient endommager la dalle tactile 3, particulièrement fragile dans le cas de dalle tactile résistive.

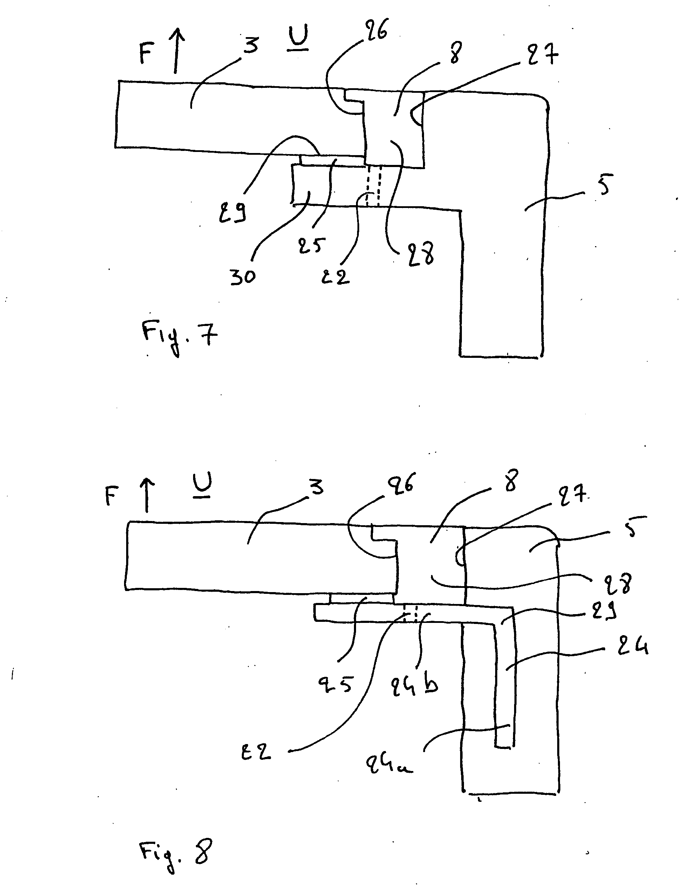

La figure 7 montre une variante de montage de la dalle tactile sur le boîtier dont l'aspect lisse est réalisé à l'aide du joint de nivellement 8. La dalle tactile 3 comporte une première face orientée vers l'utilisateur U et une seconde face inférieure 29 orientée vers l'écran (non représenté). Dans cette variante, afin de mieux solidariser la dalle tactile sur le boîtier 5, on fixe la dalle tactile à l'aide d'un moyen de fixation 25 situé d'une part sur une portion de la seconde face inférieure 29 et d'autre part sur une partie 30 du boîtier en plastique. Ainsi, ce moyen de fixation 25, monté en sandwich entre la seconde face inférieure 29 et une partie 30 du boîtier en plastique permet d'obtenir une très bonne tenue de la dalle tactile notamment à l'arrachement dont le sens est représenté par la flèche F. A titre d'exemple non limitatif, ce moyen de fixation 25 est un auto-collant double face. La fixation de la dalle tactile étant réalisée par le moyen de fixation 25, le matériau destiné à faire le joint de nivellement 8 sera sélectionné avant tout pour ses propriétés de colmatage et non de collage tels que par exemple du silicone ou de l'élastomère EPDM précités. Le degré de rigidité après polymérisation du joint de nivellement sera calculé pour qu'il soit souple afin de compenser les écarts dimensionnels résultant de la dilatation du boîtier en plastique et de la dalle tactile en verre et aussi suffisamment rigide pour qu'il ne se déforme pas sous l'effet de la pression normale d'un doigt d'utilisateur.

Préalablement à l'introduction du matériau de nivellement 8, la dalle tactile est fixée sur le boîtier 5 par le moyen de fixation 25 comme décrit précédemment.

Ce matériau de nivellement est mis en place selon le procédé décrit précédemment aux étapes 101 à 102 où le matériau est amené par des conduits d'injection 21 qui débouchent sur des orifices d'entrée 22 prévus sur le boîtier 5.

Le joint de nivellement est introduit dans une gorge 28 délimitée par deux parois 26 et 27 appartenant respectivement au bord latéral de la dalle tactile 3 et à un bord intérieur du boîtier 5. Afin que le caoutchouc demeure toujours en contact avec les parois 26 et 27 dans le cas de fortes dilatations du boîtier, on peut avantageusement injecter la garniture de nivellement de sorte que le joint de nivellement ainsi réalisé soit légèrement comprimé à une température ambiante normale de 20 °C. Avantageusement, cette compression est de 30%.

La figure 8 montre une autre variante de réalisation employant deux matériaux différents pour le collage et le nivellement. Dans ce mode de réalisation est introduit un moyen de renfort 24. A titre d'exemple non limitatif, ce moyen de renfort est constitué par un insert métallique en forme de L. Une première partie 24a de l'insert métallique en forme de L est surmoulée dans le boîtier 5 par un technique classique de surmoulage. Une seconde partie 24b du L est laissée saillante pour servir de support à la dalle tactile 3. Comme décrit à la figure 7, le joint de nivellement 8 est réalisé avec un matériau choisi pour ses bonnes propriétés de colmatage tel que par exemple du silicone ou un élastomère de type EPDM. Ce matériau est introduit dans la gorge 28 à travers un orifice 22 cette fois-ci réalisé de manière non limitative dans le moyen de renfort 24 au niveau de son extrémité saillante 24b.

Dans ce mode de réalisation le moyen de fixation 25, qui peut être un autocollant double face, est positionné entre l'insert métallique et la dalle tactile en verre. Le métal et le verre présente des coefficients de dilatation très voisins de sorte que les contraintes mécaniques subies par le moyen de fixation 25 sont très faibles. Le collage voit ainsi sa durée de vie augmentée grâce à une diminution notable des contraintes de cisaillement. De même la partie du renfort 24a surmoulée dans le boîtier limite les grandes variations en dilatation du boîtier 5 sous l'effet des écarts de température. Cela permet de réduire par voie de conséquence les variations dimensionnelles de la gorge 28 qui reçoit le joint de nivellement évitant ainsi au maximum tout décollement ou toute discontinuité entre le caoutchouc et les parois 26 et 27 de la dalle tactile 3 et du boîtier 5.

Le renfort métallique pourrait être réalisé en deux parties (non représentées). Un exemple de réalisation pourrait être mis en oeuvre en scindant l'insert en forme de L de la figure 8 au niveau du coude 29. Ainsi, on aurait un premier insert entièrement surmoulé (24a) destiné à renforcer le boîtier en plastique 5, est un second insert métallique (24b) essentiellement destiné à porter la dalle tactile 3.

Bien évidement, un tel premier insert entièrement surmoulé 24a destiné à renforcer le boîtier pourrait être utilisé dans les exemples de réalisation décrits aux figure 1 à 7 où la dalle tactile est directement fixée sur une partie en plastique du boîtier 5. Cela aurait pour effet avantageux de limiter les forces de cisaillement au niveau du moyen de fixation 25 pris en sandwich entre le verre et le plastique et de réduire au maximum les variations dimensionnelles de la gorge 28 qui reçoit le joint de nivellement.

Pour une meilleure tenue mécanique du boîtier et en complément ou non du renfort 24 précédemment décrit, on peut charger le plastique du boîtier 5 avec des fibres de verre à hauteur de 30% au maximum.

## Revendications

1. Module de commande et d'affichage pour véhicule automobile comportant :
- un écran d'affichage (2) pour l'affichage de données,
- au moins une dalle tactile (3, 16a, 16b) présentant une surface de commande (4) pour la saisie de commandes par un utilisateur, ladite dalle tactile (3) superposant au moins ledit écran d'affichage (2),
- un boîtier (5) dans lequel sont logés ledit écran d'affichage (2) et ladite dalle tactile (3), ledit boîtier (5) présentant une bordure (6) délimitant une ouverture (7) laissant apparaître ladite surface de commande (4) et ledit écran d'affichage (2),
**caractérisé en ce qu'**il comporte en outre une garniture de nivellement (8, 17a, 17b), périphérique à ladite dalle tactile (3), pour niveler la surface de commande (4) de ladite dalle tactile (3) avec ladite bordure (6) dudit boîtier (5) et **en ce que** ladite dalle tactile (2) présente une nappe de connexion (10) en partie noyée dans ladite garniture périphérique de nivellement (8).

2. Module de commande et d'affichage selon la revendication 1, **caractérisé en ce qu'**il comporte en outre au moins une zone de commande tactile (12, 12a, 12b, 12c, 12d, 12e, 12f, 12h) à l'arrière de ladite dalle tactile (3), disposée à côté dudit écran d'affichage (2), adaptée pour être rétroéclairée.

3. Module de commande et d'affichage selon la revendication 2, **caractérisé en ce qu'**il comporte deux dalles tactiles (16a, 16b), une première dalle tactile (16a) superposant ledit écran d'affichage (2) et une deuxième dalle tactile (16b) superposant lesdites zones de commande tactile (12a, 12b, 12c), chaque dalle tactile (16a, 16b) présentant une garniture périphérique de nivellement associée (17a, 17b).

4. Module de commande et d'affichage selon la revendication 3, **caractérisé en ce que** lesdites garnitures périphériques de nivellement (17a, 17b) comportent une bordure commune.

5. Module de commande et d'affichage selon l'une des revendications 3 ou 4, **caractérisé en ce que** lesdites première et deuxième dalles tactiles présentent des propriétés résistives, une première dalle tactile (16a) superposant ledit écran d'affichage (2) comportant un sandwich d'une couche déformable métallisée en vis-à-vis d'un substrat de verre métallisé, et une deuxième dalle tactile (16b) superposant lesdites zones de commande tactile (12a, 12b, 12c) comportant un sandwich de couches souples utilisant des résistances sensibles à la pression.

6. Module de commande et d'affichage selon l'une des revendications précédentes, **caractérisé en ce qu'**il comporte un film de protection (11), tel qu'un film de protection antireflet, superposant au moins en partie ladite dalle tactile (3), ledit film de protection (11) portant une encre de décor en vis-à-vis de ladite dalle tactile (3).

7. Module de commande et d'affichage selon l'une quelconque des revendications précédentes **caractérisé en ce que** le matériau utilisé pour la garniture de nivellement est un élastomère ou silicone.

8. Module de commande et d'affichage selon l'une quelconque des revendications précédentes **caractérisé en ce que** la dalle tactile (3) est solidarisée avec le boîtier (5) avec un moyen de fixation (25) différent de la garniture de nivellement (8).

9. Module de commande et d'affichage selon la revendications 8 **caractérisé en ce que** le moyen de fixation (25) est un autocollant double-face.

10. Module de commande et d'affichage selon l'une des revendications 8 à 9 **caractérisé en ce que** le moyen de fixation (25) est monté en sandwich entre une seconde face inférieure (29) que comporte la dalle tactile et une partie (30) du boîtier en plastique (5).

11. Module de commande et d'affichage selon l'une des revendications précédentes **caractérisé en ce que** le boîtier (5) comporte un renfort (24).

12. Module de commande et d'affichage selon la revendication précédente **caractérisé en ce que** le moyen de fixation (25) est monté en sandwich entre une partie du renfort (24) et la seconde face inférieure (29) de la dalle tactile (3).

13. Module de commande et d'affichage selon l'une des revendications 11 à 12 **caractérisé en ce que** le renfort est un insert métallique (24) surmoulé dans le boîtier (5).

14. Module de commande et d'affichage selon l'une des revendications 11 à 13 **caractérisé en ce qu'**au moins un orifice d'entrée (22) du matériau de nivellement est situé sur une partie du renfort (24).

15. Module de commande et d'affichage selon l'une des revendications précédentes **caractérisé en ce que** le plastique du boîtier (5) comporte entre 15% et 30 % de fibres de verre.

16. Procédé de fabrication d'un module de commande et d'affichage comportant:
- un écran d'affichage (2) pour l'affichage de données,
- au moins une dalle tactile (3, 16a, 16b) présentant une surface de commande (4) pour la saisie de commandes par un utilisateur, ladite dalle tactile (3) superposant au moins ledit écran d'affichage (2),
- un boîtier (5) dans lequel sont logés ledit écran d'affichage (2) et ladite dalle tactile (3), ledit boîtier (5) présentant une bordure (6) délimitant une ouverture (7) laissant apparaître ladite surface de commande (4) et ledit écran d'affichage (2),
, **caractérisé en ce que** :
- au cours d'une première étape (101), on dispose ladite dalle tactile et une partie du boîtier destinée à les contenir, sur une surface plane, l'ouverture dudit boîtier et ladite surface de commande de ladite dalle tactile étant disposées face à ladite surface plane, ladite surface de commande étant disposée dans ladite ouverture, et
- au cours d'une deuxième étape (102), on coule un matériau de garniture liquide par un orifice dudit boîtier, ledit orifice débouchant de ladite bordure dudit boîtier, de sorte que ledit matériau de garniture se répande dans un espace périphérique à la surface de commande, ménagé entre la bordure et la dalle tactile; pour niveler la surface de commande (4) de ladite dalle tactile (3) avec ladite bordure (6) dudit boîtier (5).

17. Procédé de fabrication selon la revendication 16, **caractérisé en ce qu'**au cours de ladite première étape (101), on dispose un film de protection sur ladite surface plane, et dans une deuxième étape (102) on coule le matériau de garniture liquide.

18. Procédé de fabrication selon la revendication 16, **caractérisé en ce qu'**il comporte une troisième étape (103) au cours de laquelle on dispose un film de protection sur ladite surface de commande.

19. Procédé de fabrication d'un module de commande et d'affichage selon l'une des revendications 17 à 19 **caractérisé en ce que** la dalle tactile (3) est solidarisée au boîtier (5) à l'aide du moyen de fixation (25) préalablement à l'introduction du matériau de garniture liquide qui forme le joint de nivellement (8).

## Patentansprüche

1. Steuer- und Anzeigemodul für ein Kraftfahrzeug, umfassend:
- einen Anzeigebildschirm (2) zur Anzeige von Daten,
- wenigstens ein Touch-Panel (3, 16a, 16b), das eine Steuerfläche (4) für die Eingabe von Befehlen durch einen Benutzer umfasst, wobei das Touch-Panel (3) wenigstens den Anzeigebildschirm (2) überlagert,
- ein Gehäuse (5), in welchem der Anzeigebildschirm (2) und das Touch-Panel (3) aufgenommen sind, wobei das Gehäuse (5) einen Rand (6) aufweist, der eine Öffnung (7) begrenzt, welche die Steuerfläche (4) und den Anzeigebildschirm (2) erscheinen lässt,
**dadurch gekennzeichnet, dass** es außerdem eine am Umfang des Touch-Panels angeordnete Einfassung zum Niveauausgleich (8, 17a, 17b) umfasst, um das Niveau der Steuerfläche (4) des Touch-Panels (3) mit dem des Randes (6) des Gehäuses (5) auszugleichen, und dadurch, dass das Touch-Panel (2) eine Anschlusslitze (10) aufweist, die teilweise in die Umfangseinfassung zum Niveauausgleich (8) eingebettet ist.

2. Steuer- und Anzeigemodul nach Anspruch 1, **dadurch gekennzeichnet, dass** es außerdem wenigstens einen Berührungssteuerungsbereich (12, 12a, 12b, 12c, 12d, 12e, 12f, 12h) auf der Rückseite des Touch-Panels (3), der neben dem Anzeigebildschirm (2) angeordnet ist, umfasst, der dafür ausgelegt ist, hinterleuchtet zu werden.

3. Steuer- und Anzeigemodul nach Anspruch 2, **dadurch gekennzeichnet, dass** es zwei Touch-Panels (16a, 16b) umfasst, wobei ein erstes Touch-Panel (16a) den Anzeigebildschirm (2) überlagert und ein zweites Touch-Panel (16b) die Berührungssteuerungsbereiche (12a, 12b, 12c) überlagert, wobei jedes Touch-Panel (16a, 16b) eine zugeordnete Umfangseinfassung zum Niveauausgleich (17a, 17b) aufweist.

4. Steuer- und Anzeigemodul nach Anspruch 3, **dadurch gekennzeichnet, dass** die Umfangseinfassungen zum Niveauausgleich (17a, 17b) einen gemeinsamen Rand umfassen.

5. Steuer- und Anzeigemodul nach einem der Ansprüche 3 oder 4, **dadurch gekennzeichnet, dass** das erste und das zweite Touch-Panel resistive Eigenschaften aufweisen, wobei ein erstes Touch-Panel (16a), das den Anzeigebildschirm (2) überlagert, eine Sandwichanordnung aus einer metallisierten verformbaren Schicht, die einem Substrat aus metallisiertem Glas gegenüberliegt, umfasst, und ein zweites Touch-Panel (16b), das die Berührungssteuerungsbereiche (12a, 12b, 12c) überlagert, eine Sandwichanordnung aus flexiblen Schichten umfasst, die druckempfindliche Widerstände verwenden.

6. Steuer- und Anzeigemodul nach einem der vorhergehenden Ansprüche, **dadurch gekennzeichnet, dass** es einen Schutzfilm (11) umfasst, wie etwa einen Antireflexion-Schutzfilm, der wenigstens einen Teil des Touch-Panels (3) überlagert, wobei der Schutzfilm (11) eine Dekorfarbe gegenüber dem Touch-Panel (3) trägt.

7. Steuer- und Anzeigemodul nach einem der vorhergehenden Ansprüche, **dadurch gekennzeichnet, dass** das für die Einfassung zum Niveauausgleich verwendete Material ein Elastomer oder Silikon ist.

8. Steuer- und Anzeigemodul nach einem der vorhergehenden Ansprüche, **dadurch gekennzeichnet, dass** das Touch-Panel (3) mit einem Befestigungsmittel (25), das von der Einfassung zum Niveauausgleich (8) verschieden ist, fest mit dem Gehäuse (5) verbunden ist.

9. Steuer- und Anzeigemodul nach Anspruch 8, **dadurch gekennzeichnet, dass** das Befestigungsmittel (25) ein doppelseitiger Klebestreifen ist.

10. Steuer- und Anzeigemodul nach einem der Ansprüche 8 bis 9, **dadurch gekennzeichnet, dass** das Befestigungsmittel (25) sandwichartig zwischen einer zweiten Unterseite (29), welche am Touch-Panel vorhanden ist, und einem Teil (30) des Gehäuses aus Kunststoff (5) angebracht ist.

11. Steuer- und Anzeigemodul nach einem der vorhergehenden Ansprüche, **dadurch gekennzeichnet, dass** das Gehäuse (5) eine Aussteifung (24) aufweist.

12. Steuer- und Anzeigemodul nach dem vorhergehenden Anspruch, **dadurch gekennzeichnet, dass** das Befestigungsmittel (25) sandwichartig zwischen einem Teil der Aussteifung (24) und der zweiten Unterseite (29) des Touch-Panels (3) angebracht ist.

13. Steuer- und Anzeigemodul nach einem der Ansprüche 11 bis 12, **dadurch gekennzeichnet, dass** die Aussteifung ein metallischer Einsatz (24) ist, der in das Gehäuse (5) eingegossen ist.

14. Steuer- und Anzeigemodul nach einem der Ansprüche 11 bis 13, **dadurch gekennzeichnet, dass** sich wenigstens eine Eintrittsöffnung (22) für das Material zum Niveauausgleich an einem Teil der Aussteifung (24) befindet.

15. Steuer- und Anzeigemodul nach einem der vorhergehenden Ansprüche, **dadurch gekennzeichnet, dass** der Kunststoff des Gehäuses (5) zwischen 15 % und 30 % Glasfasern umfasst.

16. Verfahren zur Herstellung eines Steuer- und Anzeigemoduls, welches umfasst:
- einen Anzeigebildschirm (2) zur Anzeige von Daten,
- wenigstens ein Touch-Panel (3, 16a, 16b), das eine Steuerfläche (4) für die Eingabe von Befehlen durch einen Benutzer umfasst, wobei das Touch-Panel (3) wenigstens den Anzeigebildschirm (2) überlagert,
- ein Gehäuse (5), in welchem der Anzeigebildschirm (2) und das Touch-Panel (3) aufgenommen sind, wobei das Gehäuse (5) einen Rand (6) aufweist, der eine Öffnung (7) begrenzt, welche die Steuerfläche (4) und den Anzeigebildschirm (2) erscheinen lässt,
**dadurch gekennzeichnet, dass**:
- in einem ersten Schritt (101) das Touch-Panel und ein Teil des Gehäuses, der dazu bestimmt ist, es aufzunehmen, auf einer ebenen Fläche angeordnet werden, wobei die Öffnung des Gehäuses und die Steuerfläche des Touch-Panels der ebenen Fläche zugewandt angeordnet werden, wobei die Steuerfläche in der Öffnung angeordnet wird, und
- in einem zweiten Schritt (102) flüssiges Einfassungsmaterial durch eine Öffnung des Gehäuses gegossen wird, wobei diese Öffnung aus dem Rand des Gehäuses hinausführt, derart, dass sich das Einfassungsmaterial in einem Raum entlang des Umfangs der Steuerfläche ausbreitet, der zwischen dem Rand und dem Touch-Panel ausgebildet ist, um das Niveau der Steuerfläche (4) des Touch-Panels (3) mit dem des Randes (6) des Gehäuses (5) auszugleichen.

17. Herstellungsverfahren nach Anspruch 16, **dadurch gekennzeichnet, dass** im ersten Schritt (101) ein Schutzfilm auf der ebenen Fläche angeordnet wird und in einem zweiten Schritt (102) das flüssige Einfassungsmaterial gegossen wird.

18. Herstellungsverfahren nach Anspruch 16, **dadurch gekennzeichnet, dass** es einen dritten Schritt (103) umfasst, in dem ein Schutzfilm auf der Steuerfläche angeordnet wird.

19. Verfahren zur Herstellung eines Steuer- und Anzeigemoduls nach einem der Ansprüche 17 bis 19, **dadurch gekennzeichnet, dass** vor der Einleitung des flüssigen Einfassungsmaterials, welches die Verbindungsstelle zum Niveauausgleich (8) bildet, das Touch-Panel (3) mithilfe des Befestigungsmittels (25) fest mit dem Gehäuse (5) verbunden wird.

## Claims

1. Motor vehicle control and display module including:
- a display screen (2) for displaying data,
- at least one touch-sensitive pad (3, 16a, 16b) having a control surface (4) for the entry of commands by a user, said touch-sensitive pad (3) being superposed at least on said display screen (2),
- a box (5) in which said display screen (2) and said touch-sensitive pad (3) are accommodated, said box (5) having a border (6) delimiting an opening (7) leaving visible said control surface (4) and said display screen (2),
**characterized in that** it further includes a leveling trim (8, 17a, 17b), peripheral to said touch-sensitive pad (3), for leveling the control surface (4) of said touch-sensitive pad (3) with said border (6) of said box (5) and **in that** said touch-sensitive pad (2) has a connecting ribbon cable (10) partly buried in said peripheral leveling trim (8).

2. Control and display module according to Claim 1, **characterized in that** it further includes at least one touch-sensitive control area (12, 12a, 12b, 12c, 12d, 12e, 12f, 12h) behind said touch-sensitive pad (3), disposed beside said display screen (2) and adapted to be backlit.

3. Control and display module according to Claim 2, **characterized in that** it includes two touch-sensitive pads (16a, 16b), a first touch-sensitive pad (16a) being superposed on said display screen (2) and a second touch-sensitive pad (16b) being superposed on said touch-sensitive control areas (12a, 12b, 12c), each touch-sensitive pad (16a, 16b) having an associated peripheral leveling trim (17a, 17b).

4. Control and display module according to Claim 3, **characterized in that** said peripheral leveling trims (17a, 17b) have a common border.

5. Control and display module according to either of Claims 3 and 4, **characterized in that** said first and second touch-sensitive pads have resistive properties, a first touch-sensitive pad (16a) superposed on said display screen (2) including a sandwich comprising a metalized deformable layer trim a metalized glass substrate, and a second touch-sensitive pad (16b) superposed on said touch-sensitive control areas (12a, 12b, 12c) including a sandwich of flexible layers utilizing force-sensitive resistances.

6. Control and display module according to any one of the preceding claims, **characterized in that** it includes a protective film (11), such as an antireflection protective film, superposed at least in part on said touch-sensitive pad (3), said protective film (11) carrying a décor ink trim said touch-sensitive pad (3).

7. Control and display module according to any of the preceding claims, **characterized in that** the material used for the leveling trim is an elastomer or silicone.

8. Control and display module according to any one of the preceding claims, **characterized in that** the touch-sensitive pad (3) is fastened to the box (5) by fixing means (25) different from the leveling trim (8).

9. Control and display module according to Claim 8, **characterized in that** the fixing means (25) is a double-sided self-adhesive.

10. Control and display module according to either of Claims 8 and 9, **characterized in that** the fixing means (25) are sandwiched between a lower second face (29) of the touch-sensitive pad and a portion (30) of the plastic box (5).

11. Control and display module according to any one of the preceding claims, **characterized in that** the box (5) includes a reinforcement (24).

12. Control and display module according to the preceding claim, **characterized in that** the fixing means (25) are sandwiched between a part of the reinforcement (24) and the lower second face (29) of the touch-sensitive pad (3).

13. Control and display module according to either of Claims 11 and 12, **characterized in that** the reinforcement is a metal insert (24) molded into the box (5).

14. Control and display module according to any one of Claims 11 to 13, **characterized in that** there is at least one leveling material inlet orifice (22) situated on a portion of the reinforcement (24).

15. Control and display module according to any one of the preceding claims, **characterized in that** the plastic of the box (5) includes from 15% to 30% glass fibers.

16. Method of manufacturing a control and display module including:
- a display screen (2) for displaying data,
- at least one touch-sensitive pad (3, 16a, 16b) having a control surface (4) for the entry of commands by a user, said touch-sensitive pad (3) being superposed at least on said display screen (2),
- a box (5) in which said display screen (2) and said touch-sensitive pad (3) are accommodated, said box (5) having a border (6) delimiting an opening (7) leaving visible said control surface (4) and said display screen (2),
**characterized in that**:
- during a first step (101), said touch-sensitive pad and a portion of the box intended to contain it are disposed on a plane surface, the opening of said box and said control surface of said touch-sensitive pad being disposed trim said plane surface, said control surface being disposed in said opening, and
- during a second step (102), a liquid trim material is poured via an orifice of said box, said orifice discharging from said border of said box, so that said trim material expands into a space peripheral to the control surface, produced between the border and the touch-sensitive pad, for leveling the control surface (4) of said touch-sensitive pad (3) with said border (6) of said box (5).

17. Method of manufacture according to Claim 16, **characterized in that** a protective film is disposed on said plane surface during said first step (101) and the liquid trim material is poured in a second step (102).

18. Method of manufacture according to Claim 16, **characterized in that** it includes a third step (103) during which a protective film is placed on said control surface.

19. Method according to any one of Claims 17 to 19 of manufacturing a control and display module, **characterized in that** the touch-sensitive pad (3) is fastened to the box (5) by fixing means (25) prior to the introduction of the liquid trim material that forms the leveling seal (8).
